# EUROPEAN PATENT SPECIFICATION

(11) **EP 0 751 413 B1**
(45) Date of publication and mention of the grant of the patent: **17.09.2003**
(21) Application number: 96420198.2
(22) Date of filing: 07.06.1996
(51) Int. Cl.: G02B 7/10, G03B 27/46

(54) **Zoom lens apparatus**
Zoomlinsengerät
Appareil à objectif zoom

(30) Priority: 30.06.1995 US 626; 21.12.1995 US 576177
(43) Date of publication of application: 02.01.1997
(60) Divisional application: 02024618.7
(73) Proprietor: EASTMAN KODAK COMPANY, Rochester, New York 14650-2201 (US)
(72) Inventor: Weigand , John George, c/o Eastman Kodak Co., Rochester, NY 14650-2201 (US); Kralles, Christopher John, c/o Eastman Kodak Co., Rochester, NY 14650-2201 (US); Reyner, Noel Leonard, c/o Eastman Kodak Co., Rochester, NY 14650-2201 (US)
(74) Representative: Weber, Etienne Nicolas

(56) References cited:
- EP-A- 0 474 563
- EP-A- 0 485 302
- DE-A- 3 234 933
- US-A- 4 008 951
- US-A- 5 016 993

## Description

### Field of the Invention:

This invention relates to the art of electromechanical drive systems and, more particularly, to an optical zoom lens. One area of use of the invention is in a photofinishing apparatus such as a high speed photographic printer.

### BACKGROUND OF THE INVENTION

There currently exists cameras that have the capability of providing more than one size format image for a single filmstrip. For example, the Kodak Cameo camera can take either standard or panoramic format size pictures as desired (often referred to as interspersed pan feature).

In order for high speed photographic printers to print developed film obtained from cameras capable of taking two or more format size images, the paper exposure zoom lens assembly on the printer must be capable of switching back and forth between magnifications for different print formats. To achieve or maintain high productivity, the lens assembly of an electromechanical drive system of a zoom lens assembly must be capable of performing at high speed and accelerations without incurring mechanical binding or excessive component wear. It is expected that a zoom lens assembly in a high volume photofinishing operation may experience upwards of 80 million actuations.

Typical lens assembly designs for high speed printers utilize cam and follower drive designs which are not particularly suited for high speed operation or extensive repetitive change. Cam and follower drives are expensive and susceptible to wear-related component failures.

Typical electromechanical lead screw drive systems are mechanically over-constrained, requiring expensive motor couplings and precise machining and alignments.

Other mechanical arrangements also suffer from the same deficiencies as cam and follower assemblies. Gears and belts are not suitable for high actuations in that they either wear out too quickly or are subject to frequent replacement.

It is highly desirable to provide an exactly constrained and accurate zoom lens assembly that is of low cost to manufacture, easy to assemble, and also is capable of long extended use for millions of actuations without component failure or maintenance.

### SUMMARY OF THE INVENTION

In one aspect of the present invention there is provided a zoom lens apparatus comprising:
a pair of substantially parallel guide rods;
a first carriage slideably mounted to the pair of parallel guide rods;
a first lens element secured to the first carriage;
a first lead screw having a longitudinal axis, the first lead screw is mounted to the apparatus by a first bearing block assembly such that the longitudinal axis is substantially parallel to the pair of guide rods, the bearing block constraining the movement of the first lead screw along the longitudinal axis;
a first threaded drive coupling which is threadingly engaged to the first lead screw so that it can move along the axis of the first lead screw, the first threaded drive coupling is connected to the first carriage so as to move the first carriage along the pair of guide rods, the first threaded drive coupling providing substantially zero axial play;
a first motor having a drive shaft for driving the first lead screw, the shaft of the motor being connected to the first bearing block assembly and is mounted to the apparatus by a flex member;
a second carriage slideably mounted to the first pair of parallel guide rods;
a second lens element secured to the second carriage;
a second lead screw having a longitudinal axis, the second lead screw is mounted to the apparatus by a second bearing block assembly such that the longitudinal axis is substantially parallel to the pair of guide rods, the bearing block constraining the movement of the second lead screw along the longitudinal axis;
a second threaded drive coupling which is threadingly engaged to the second lead screw so that it can move along the axis of the second lead screw, the second threaded drive coupling is connected to the second carriage so as to move the second carriage along the pair of guide rods, the second threaded drive coupling providing substantially zero axial play; and
a second motor having a drive shaft for driving the second lead screw, the shaft of the motor being connected to the second bearing block assembly and is mounted to the apparatus by a flex member.

In another aspect there is provided a bearing block assembly for use in connecting two axially aligned shafts and constraining the shafts along the axis, the assembly comprising:
an annular mounting block having a opening, the opening having a first annular bore section of a first diameter and a second annular bore section of a second diameter, the first and second bore sections being substantially concentric with each other, the second diameter being greater than the first diameter;
a first radial bearing disposed within the first annular bore section and a second radial bearing disposed within the second annular bore section, the first and second radial bearings being secured within the opening; and
a shaft coupling member having a flange member, the flange being disposed between the first and second radial bearings, a spring member is disposed between the flange and the first or second radial bearing so as to apply a separating force between the first and second radial bearings.

### BRIEF DESCRIPTION OF THE DRAWINGS

FIG. 1 is an elevational view partially broken away of a zoom lens assembly made in accordance with the present invention;
FIG. 2 is an enlarged partially broken away view of one of the bearing block assemblies used in the zoom lens assembly of FIG. 1;
FIG. 3 is an enlarged view of one of the drive motors illustrated how it is mounted to the zoom lens assembly;
FIG. 4 is a schematic diagram of a photographic printer utilizing the zoom lens assembly of FIG. 1.

### DETAILED DESCRIPTION OF THE INVENTION

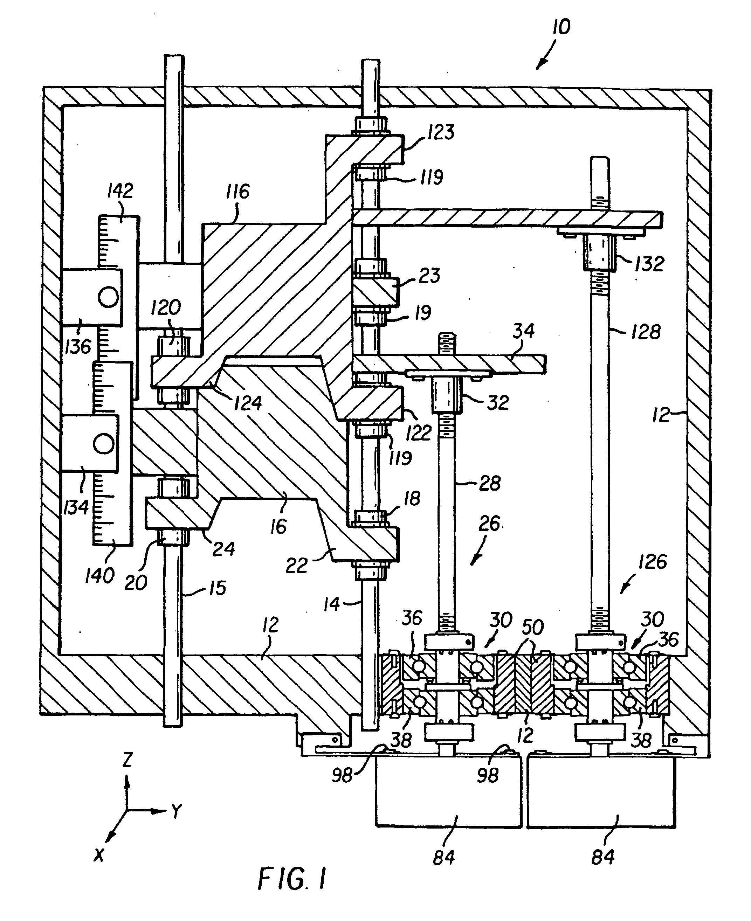

Referring to FIGS. 1-3, there is illustrated a zoom lens assembly 10 made in accordance with the present invention. The zoom lens assembly 10 is designed for use in a photofinishing apparatus, in particular, a high speed photographic printer wherein images taken from a film negative are printed onto a photosensitive paper. An example of a high speed printer for which a zoom lens assembly of the present invention could be use is the CLAS 35 printer, sold by the Eastman Kodak Company. Such a device is designed to print up to about eight images per second on photosensitive paper. A printer made in accordance with the present invention is also designed to accept images from various format size films and produce various format size prints therefrom (e.g., panoramic, standard, portrait, etc.), even if the print size format varies from image to image. Thus, it is extremely important to provide a device that is durable, yet provides the degree of accuracy necessary to provide high quality prints.

The zoom lens assembly 10 includes a pair of spaced substantially parallel guide rods 14,15. A first lens carriage 16 is slideably mounted to guide rods 14,15 by linear bearings 18,19,20. The lens carriage is designed to hold lens elements (not shown) for projecting of an image onto a photosensitive material. The linear bearings 18,19,20 are located in arm sections 22,23,24 on lens carriage 16. The linear bearings 18,19,20 allow the carriage to slide along the axis of the guide rods 14,15. For the sake of clarity in discussing the present invention, an x,y,z coordinate system is illustrated in the lower portion of FIG. 1. The linear bearings 18,19,20 provide five degrees of constraint to the lens carriage 16. In particular, it constrains the carriage 16 along the x and y axis, and constrains rotation about the x, y, and z axis. The bearing 20 is spring biased within arm section 24 such that bearing 20 is free to rotate in the ex direction so that it is connected to guide rod 15 and provides only one degree of constraint (i.e., rotation about z axis of guide rod 14). This type of constraint system allows for generous guide rod misalignment tolerances. The remaining single constraint to the lens carriage 16 is provided by the drive system 26. The drive system moves the lens carriage 16 along the z axis. The drive system includes a lead screw 28 having its lower end secured to a compliant bearing block assembly 30 which is secured to support frame 12. The upper end of the lead screw drives a drive nut 32, such that the nut 32 will move along the axis of the lead screw 28. The drive nut 32 is secured to drive member 34, which is secured to lens carriage 16. Thus, as the drive nut 32 moves along the axis of lead screw 28, this will cause the lens carriage 16 to move along the length of the guide rod 14 moving the lens carriage in the z direction. In the embodiment illustrated, the drive nut 32 is secured to drive member 34 by three screws 35, however, drive nut 32 may be secured to drive member 34 in any desired manner. The drive nut 32 is preferably a zero-backlash nut, which minimizes the backlash between the lens carriage and lead screw. A suitable zero-backlash nut may be purchased from Kerk Motion Products, Inc. of Hollis, New Hampshire. A typical zero-backlash nut has a relative degree of compliance, and thus will allow freedom of the lead screw 28 in only two degrees of constraint, i.e., the angular movement about the x and y axis. This type of connection behaves substantially like a ball joint allowing the lead screw 28 to pivot within a conical volume.

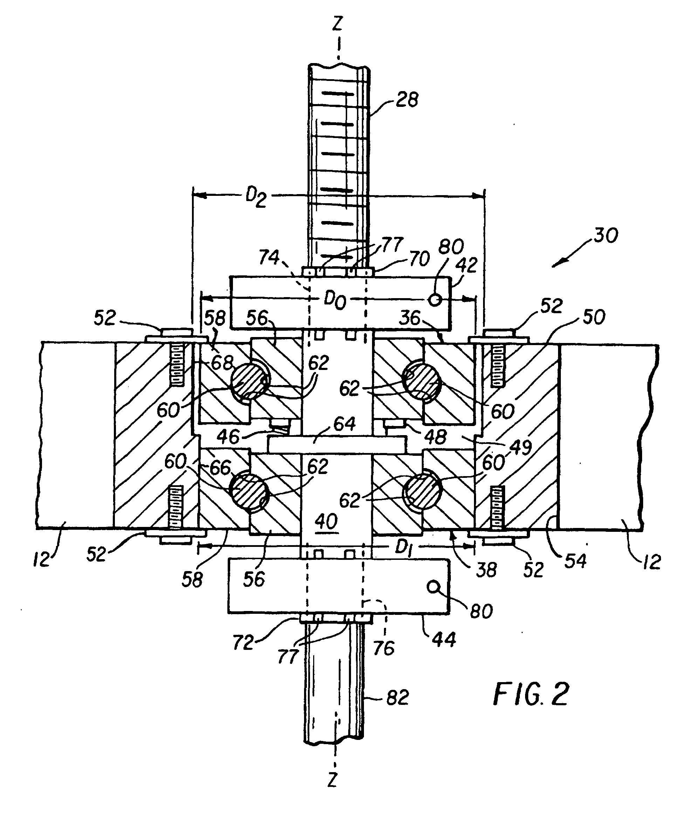

Referring to FIG. 2, the compliant bearing block assembly 30 comprises a pair of radial bearings 36,38, a split shaft coupling 40, two clamping collars 42,44, a spring washer 46, a plain washer 48, mounting block 50, and retaining fasteners 52. The mounting block 50 is secured to support frame 12 by an appropriate fastener (not shown). However, mounting block 50 may be used to support frame 12 by any desired manner. Each of the radial bearings 36,38 include an inner race 56 and an outer race 58, which are interconnected by a plurality of spherical balls 60 that are captured in substantially half hemispherical sections 62 provided in inner and outer races 56,58. The split shaft coupling 40 includes an annular flange 64, which is disposed between the inner races 56 of radial bearings 36,38. The spring washer 46 and flat washer 48 are placed adjacent to each other and are located between the flange 64 and one of the inner races 56. In the particular embodiment illustrated, the spring washer 46 and plain washer 48 are disposed between the flange 64 and adjacent inner race 56 of radial bearing 36. The spring 46 provides a force which tends to separate the inner races 56 of bearings 36,38. The mounting block 50 has an mounting opening 49 which comprises a first annular bore section 66 having a diameter D1 and an adjacent second annular bore section 68. The first and second bore sections being concentric. The bearing 38 is disposed within bore section 66 and bearing 38 is disposed within bore section 68. Preferably, as illustrated, diameter D1 is such that the outer diameter D0 of the outer race 58 of bearing 38 is in direct contact or press fit into the bore section 66. The second annular bore 68 has a diameter D2, which is greater than the diameter D1, such that the outer periphery of outer race 58 of radial bearing 36 is not constrained by the mounting block 50. The screws 52 maintain the bearings 36,38 within bore sections 66,68. The split shaft coupling 40 has a shaft diameter D3 which is less than the inside diameter D4 of the inner races 56. Since the outer diameter D0 of race 56 is less than the diameter D2 of second bore section 68, the race 56 is allowed to move freely along the axis z-x of the split shaft coupling 40 within the confines of bore section 68. The spring washer 46, as previously noted, provides an axial force separating which tends to separate radial bearings 36,38.

The split shaft coupling 40 has an upper section 70 and a lower section 72, each having an internal bore 74,76, respectively, (as illustrated by dash lines). The internal bores 74,76 are designed to receive the end of a shaft. In the particular embodiment illustrated, the internal bore 74 of upper section 70 is designed to receive the lower end 75 of lead screw 28. Clamping collar 42 is provided with means for clampingly holding the end 75 of lead screw 28 within internal bore 74. In the particular embodiment illustrated, this is accomplished by providing a plurality of slots 77 in upper section 70, which allows a screw (not shown) to be placed through opening 80 whereby, upon appropriate tightening, will cause the upper section 70 to clampingly engage the lower end 75 of lead screw 28. A similar locking arrangement is provided at the lower section 72, like numerals representing like parts and function. The lower section 72 is designed to receive drive shaft 82 of stepper motor 84. Shaft 82 provides the driving force to compliant bearing coupling assembly 30.

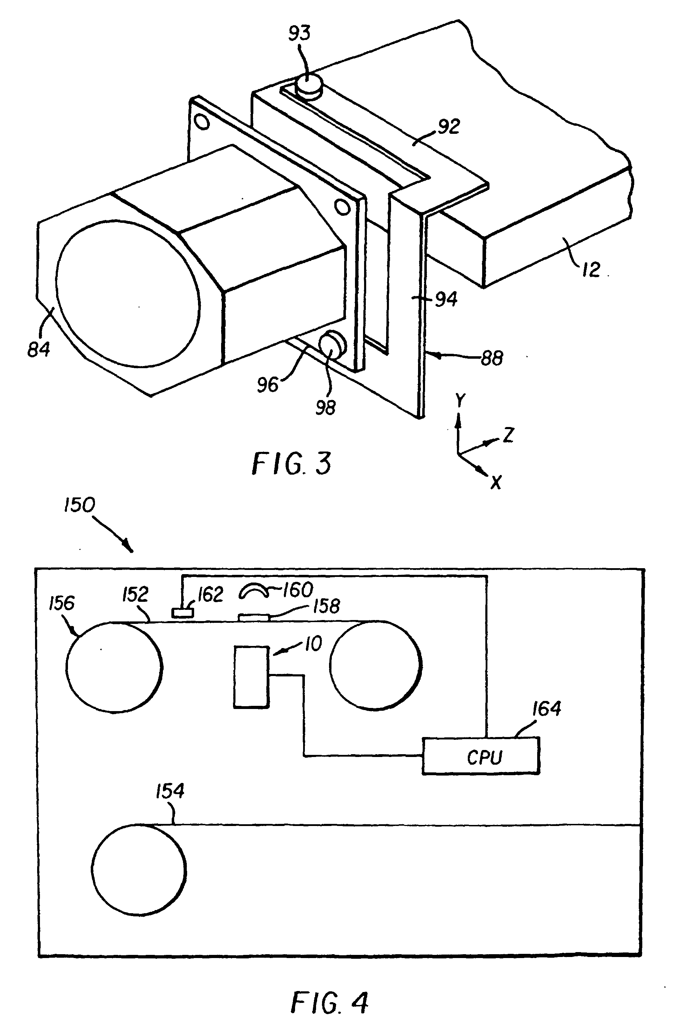

Referring to FIG. 3, the stepper motor 84 is mounted to support frame 12 by a mounting member 88. The mounting member 88 is designed to provide a flexure connection between the stepper motor 84 and frame support 12. In the particular embodiment illustrated, the flexure member 88 comprises a first leg member 92 having its furthest end secured to frame support 12 by a screw 93 (which extends in the x direction), a second flexible leg section 94 (which extends in the y direction) and a third mounting leg section 96 (which extends in the x direction) on which the stepper motor 84 is mounted by a pair of fasteners 98. However, it is to be understood that the stepper motor 84 may be mounted to the third mounting leg section 96 by any desired means. The mounting bracket 88 is configured such that there is provided a certain degree of flexure such that the stepper motor is constrained in five degrees of constraints, i.e., rotation about the z axis. The shaft 82 of the stepper motor 84 is allowed to rotate about the z axis.

The zoom lens assembly 10 includes a second lens carriage 116. The lens carriage 116 is mounted to guide rods 14,15 in much the same manner as lens carriage 16 is mounted to guide rods 14,15. In particular, the lens carriage 116 is mounted through use of linear bearings 118,119,120 and moved along the guide rods 14,15. Likewise, lens carriage 116 includes arm sections 122,123,124 on which the linear bearings 118,119,120, respectively, are mounted. The arm portions 122,123,124 of carriage 116 and arm sections 22,23,24 of carriage 16 are shaped such that the carriages 16,116 do not come into contact with each other. However, if desired, separate guide rods for each lens carriage may be provided.

A drive system 126 is provided for driving drive nut 132 on lead screw 128. The drive system 126 is substantially identical to the drive system 26, like numerals indicating like parts and operation. In this embodiment, the lens carriage 116 is provided with lens elements (not shown), which align with lens elements (not shown)of lens carriage 116. The lens carriages 16,116 move along their respective guide rods such that the lens elements in each carriage are properly spaced so as to provide the appropriate magnification and format size required.

Referring to FIG. 1, there is provided means for recalibrating and checking the position of each of the carriages 16,116 with respect to the frame support 12. In particular, there is provided glass linear scales 140,142, one secured to each of the respective carriages 16,116. The scales each have markings for identifying a vertical position with respect to the z axis. The linear sensors 134,136 are provided, one associated with each of the scales 140,142, respectively. The sensors 134,136 are used to provide information of the relative position of each of the carriages 16,116. This information is relayed to a central processing unit which is used to check and recalibrate the position of the carriages.

Referring to FIG. 4, there is illustrated in schematic form a photographic printer 150 employing a zoom lens assembly 10 made in accordance with the present invention. The photographic printer 150 is designed to print images developed on a photographic film 152, for example, 35mm film, onto a photosensitive material 154 of a predetermined width, such as photographic sensitive paper. In particular, mechanism 156 is provided for supplying photographic film at a print gate 158 where upon light from light source 160 exposes the image thereon through zoom lens assembly 10 onto the photographic paper 154. The zoom lens assembly allows for the most efficient use of the predetermined width of the photosensitive material 154. Appropriate means are also provided for feeding of the photosensitive paper 154 in accordance with the images being exposed thereon from film 152 as is customarily done in the art. An appropriate sensor may be provided prior to exposure of film 152 at gate 158 so as to determine the format size of the image existing thereon. Therefore, depending upon the format size, the zoom lens assembly 10 will be appropriately adjusted to provide the appropriate format size onto the photosensitive material 154. Sensor 162 determines the particular format and relays this information to CPU 164, which then in turn independently controls the stepper motors 84 of zoom lens assembly 10. The stepper motors 84 are activated so as to properly position the carriages 16,116 to provide the appropriate magnification. Read head sensors 134,136 provide information to CPU 164 as to the position of the carriages 16,116 along the z axis. If the carriages 16,116 are properly positioned, no further action is necessary. However, if the read head sensors 134,136 indicate that the carriages 16,116 are not properly positioned, the stepper motors 84 will be appropriately activated until the carriages 16,116 are properly located. This information will be stored in the computer 164 for future movement of the carriages 16,116.

Thus, it can be seen that there is provided a zoom lens assembly that is relatively low in cost to manufacture, easy to assembly, provides accurate fast positioning of the lens and is also capable of long extended use for millions of actuations without component failure or maintenance.

It is to be understood that various other changes and modifications may be made without departing from the scope of the present invention. The present invention being defined by the following claims:

### Parts List:

- 10: zoom lens assembly
- 12: support frame
- 14,15: guide rods
- 16: first lens carriage
- 18,19,20: linear bearings
- 22,23,24: arm sections
- 26: drive system
- 28: lead screw
- 30: bearing block assembly
- 32: drive nut
- 34: drive member
- 35: screws
- 36,38: radial bearings
- 40: split shaft coupling
- 42,44: clamping collars
- 46: spring washer
- 48: plain washer
- 49: mounting opening
- 50: mounting block
- 52: retaining fasteners
- 56: inner race
- 58: outer race
- 60: spherical balls
- 62: half hemispherical sections
- 64: annular flange
- 66: first annular bore section
- 68: second annular bore section
- 70: upper section
- 72: lower section
- 74,76: internal bore
- 75: lower end
- 77: slots
- 80: opening
- 82: drive shaft
- 84: stepper motor
- 88: mounting member
- 92: first leg member
- 93: screw
- 94: second flexible leg section
- 96: third mounting leg section
- 98: fasteners
- 116: second lens carriage
- 118,119,120: linear bearings
- 122,123,124: arm sections
- 126: drive system
- 128: lead screw
- 132: drive nut
- 134,136: linear sensors
- 140,142: linear scales
- 150: photographic printer
- 152: photographic film
- 154: photosensitive material
- 156: mechanism
- 158: print gate
- 160: light source
- 162: sensor
- 164: CPU

## Claims

1. A zoom lens apparatus(10) comprising:
a pair of substantially parallel guide rods(14, 15);
a first carriage(16) slideably mounted to said pair of parallel guide rods(14, 15);
a first lens element secured to said first carriage;
a first lead screw(28) having a longitudinal axis, said first lead screw(28) being mounted to said apparatus by a first bearing block assembly(30) such that said longitudinal axis is substantially parallel to said pair of guide rods(14, 15), said first bearing block assembly(30) constraining the movement of said first lead screw(28) along said longitudinal axis;
a first threaded drive nut(32) coupling which is threadingly engaged to said first lead screw(28) so that for movement along the axis of said first lead screw(28), said first threaded drive nut(32) coupling being connected to said first carriage(16) so as to move said first carriage(16) along said first pair of guide rods(14, 15), said first threaded drive nut coupling providing substantially zero axial play;
a first motor(84) having a drive shaft(82) for driving said first lead screw(28), said drive shaft(82) of said motor being connected to said first bearing block assembly(30) and is mounted to said apparatus by a flex member(88);
a second carriage(116) slideably mounted to said first pair of parallel guide rods(14, 15);
a second lens element secured to said second carriage;
a second lead screw(128) having a longitudinal axis, said second lead screw(128) being mounted to said apparatus by a second bearing block assembly(30) such that said longitudinal axis is substantially parallel to said pair of guide rods(14,15), said second bearing block assembly(30) constraining the movement of said second lead screw (128) along said longitudinal axis;
a second threaded drive nut(132) coupling which is threadingly engaged to said second lead screw(128) for movement along the axis of said second lead screw(128), said second threaded drive nut(132) coupling being connected to said second carriage(116) so as to move said second carriage(116) along said first pair of guide rods(14, 15), said second threaded drive coupling providing substantially zero axial play; and
a second motor(84) having a drive shaft for driving said second lead screw(128), said shaft of said motor(84) being connected to said second bearing block assembly(30) and is mounted to said apparatus by a flex member(88).

2. A zoom lens apparatus according to claim 1 further comprising a frame(12), said first and second bearing assemblies(30) being mounted to said frame(12), a bearing block assembly(30) for use in connecting said first and second lead screws(28, 128) to said first and second motors (84), respectively, said first and second bearing block assemblies (30) each comprising;
an annular mounting block(50) having a opening(49), said opening having a first annular bore section(66) of a first diameter and a second annular bore section(68) of a second diameter, said first and second bore sections(66, 68) being substantially concentric with each other, said second diameter being greater than said first diameter;
a first radial bearing(36) disposed within said first annular bore section(68) and a second radial bearing(38) disposed within said second annular bore section(66), said first and second radial bearings(36, 38) being secured within said opening(49); and
a shaft coupling member having a flange member(64), said flange(64) being disposed between said first and second radial bearings(36, 38), a spring member(46) is disposed between said flange(64) and said first or second radial bearing(36, 38) so as to apply a separating force between said first and second radial bearings(36, 38).

3. A zoom lens assembly according to claim 2 wherein said shaft coupling member comprises an upper section(70) and a lower section(72), said upper and lower sections(70, 72) each having an internal bore(74, 76) for receiving the end of a shaft.

4. A zoom lens assembly according to claim 3, said upper section(70) and said lower section(72) having a plurality of slots(77) which extend into said bore(74, 76), said assembly further comprising a collar(42, 44) associated with said lower section(72) and said upper section(70) of said shaft coupling member and means for clamping said collar so as to clamp a shaft placed in said internal bore(74, 76) of said upper and lower sections(70, 72).

5. A zoom lens assembly according to claim 2 wherein said first and second bearings(36, 38) each comprise an inner race(56) and an outer race(58), said first bearing(36) is securely positioned within said first annular bore section(66), said second bearing(38) having an outer diameter less than said second diameter of said second annular bores such that said second bearing(38) is not constrained by the sides of said second annular bore section(68).

6. A zoom lens assembly according to claim 1 further comprising means for recalibrating the position of the carriages, said means comprises a linear scale(140, 142) secured to each of the carriages (16, 116), a stationary sensor(134, 136) for reading each of said scales(140, 142), and a CPU(164) for controlling the movement of said motors (84) such that the position of said carriages(16, 116) is properly adjusted.

## Patentansprüche

1. Zoomobjektiv (10), **gekennzeichnet durch**
zwei im wesentlichen parallele Führungsstangen (14, 15);
einen ersten, auf den beiden parallelen Führungsstangen (14, 15) verschiebbar gelagerten Schlitten (16);
ein am ersten Schlitten befestigtes erstes Linsenelement;
eine erste Führungsschraube (28), die eine Längsachse aufweist und am Zoomobjektiv (10) mittels eines ersten Lagerblocks (30) derart befestigt ist, dass die Längsachse sich im wesentlichen parallel zu den beiden Führungsstangen (14, 15) erstreckt, wobei der erste Lagerblock (30) die Bewegung der ersten Führungsschraube (28) entlang der Längsachse einschränkt;
eine erste, mit einem Gewinde versehene Antriebsmutter (32), die derart in Schraubverbindung mit der ersten Führungsschraube (28) steht, dass die Antriebsmutter (32) zur Bewegung entlang der Achse der ersten Führungsschraube (28) mit dem ersten Schlitten (16) derart verbunden ist, dass dieser entlang der beiden Führungsstangen (14, 15) bewegbar ist, wobei die Antriebsmutter im wesentlichen keinerlei axiales Spiel hat;
einen ersten Motor (84) mit einer Antriebswelle (82) zum Antreiben der ersten Führungsschraube (28), wobei die Antriebswelle (82) des Motors mit dem ersten Lagerblock (30) verbunden und am Zoomobjektiv mittels eines biegbaren Elements (88) befestigt ist;
einen zweiten, auf den beiden ersten parallelen Führungsstangen (14, 15) verschiebbar gelagerten Schlitten (116);
ein am zweiten Schlitten befestigtes zweites Linsenelement;
eine zweite Führungsschraube (128), die eine Längsachse aufweist und am Zoomobjektiv (10) mittels eines zweiten Lagerblocks (30) derart befestigt ist, dass die Längsachse sich im wesentlichen parallel zu den beiden Führungsstangen (14,15) erstreckt, wobei der zweite Lagerblock (30) die Bewegung der zweiten Führungsschraube (128) entlang der Längsachse einschränkt;
eine zweite, mit einem Gewinde versehene Antriebsmutter (132), die derart in Schraubverbindung mit der zweiten Führungsschraube (128) steht, dass die Antriebsmutter (132) zur Bewegung entlang der Achse der zweiten Führungsschraube (128) mit dem zweiten Schlitten (116) derart verbunden ist, dass dieser entlang der beiden Führungsstangen (14, 15) bewegbar ist, wobei die zweite Antriebsmutter im wesentlichen keinerlei axiales Spiel hat; und
einen zweiten Motor (84) mit einer Antriebswelle (82) zum Antreiben der zweiten Führungsschraube (128), wobei die Antriebswelle des Motors (84) mit dem zweiten Lagerblock (30) verbunden und am Zoomobjektiv mittels eines biegbaren Elements (88) befestigt ist.

2. Zoomobjektiv nach Anspruch 1, **gekennzeichnet durch** einen Rahmen (12), auf dem der erste und zweite Lagerblock (30) gelagert ist, von denen ein Lagerblock (30) dazu verwendbar ist, die erste und zweite Führungsschraube (28, 128) mit dem ersten bzw. zweiten Motor (84) zu verbinden, wobei der erste und zweite Lagerblock (30) jeweils umfassen:
einen ringförmigen Lagerblock (50) mit einer Öffnung (49), die einen ersten ringförmigen Bohrlochabschnitt (66) mit einem ersten Durchmesser und einen zweiten ringförmigen Bohrlochabschnitt (68) mit einem zweiten Durchmesser aufweist, wobei der erste und zweite Bohrlochabschnitt (66, 68) im wesentlichen konzentrisch zueinander sind und der zweite Durchmesser größer ist als der erste Durchmesser;
ein erstes radiales Lager (36), das innerhalb des ersten ringförmigen Bohrlochabschnitts (68) angeordnet ist, und ein zweites radiales Lager (38), das innerhalb des zweiten ringförmigen Bohrlochabschnitts (66) angeordnet ist, wobei das erste und zweite radiale Lager (36, 38) innerhalb der Öffnung (49) befestigt sind; und
ein Wellenkopplungselement mit einem Flansch (64), der zwischen dem ersten und zweiten radialen Lager (36, 38) angeordnet ist, und eine Feder (46), die zwischen dem Flansch (64) und dem ersten und zweiten radialen Lager (36, 38) derart angeordnet ist, dass sie eine Trennkraft zwischen dem ersten und zweiten radialen Lager (36, 38) ausübt.

3. Zoomobjektiv nach Anspruch 2, **dadurch gekennzeichnet, dass** das Wellenkopplungselement einen oberen (70) und einen unteren Abschnitt (72) aufweist, die jeweils ein inneres Bohrloch (74, 76) umfassen zum Aufnehmen des Ende einer Welle.

4. Zoomobjektiv nach Anspruch 3, **dadurch gekennzeichnet, dass** der obere (70) und der untere Abschnitt (72) eine Vielzahl von Schlitzen (77) aufweisen, die sich in das Bohrloch (74, 76) erstrecken, und dass das Zoomobjektiv eine dem unteren (70) und dem oberen Abschnitt (72) des Wellenkopplungselements zugeordnete Hülse (42, 44) umfasst sowie Mittel zum Festklemmen der Hülse derart, dass eine im inneren Bohrloch (74, 76) des ersten und zweiten Abschnitts (70, 72) sitzende Welle festklemmbar ist.

5. Zoomobjektiv nach Anspruch 2, **dadurch gekennzeichnet, dass** das erste und zweite Lager (36, 38) jeweils einen inneren (56) und einen äußeren Laufring (58) aufweisen, wobei das erste Lager (36) innerhalb des ersten ringförmigen Bohrlochabschnitts (66) befestigt ist und das zweite Lager (38) einen äußeren Durchmesser hat, der kleiner ist als der zweite Durchmesser des zweiten ringförmigen Bohrlochs, derart, dass das zweite Lager (38) von den Seiten des zweiten ringförmigen Bohrlochabschnitts (68) nicht zusammendrückbar ist.

6. Zoomobjektiv nach Anspruch 1, **dadurch gekennzeichnet, dass** Mittel vorgesehen sind zum erneuten Eichen der Position des Schlittens und dass die Mittel eine an jedem der Schlitten (16, 116) angebrachte lineare Messskala (140, 142) aufweisen, einen ortsfesten Sensor (134, 136) zum Ablesen der jeweiligen Messskala (140, 142) und eine CPU (164) zum Steuern der Bewegung des Motors (84) derart, dass die Position der Schlitten (16, 116) genau einstellbar

## Revendications

1. Appareil à objectif à changement de focale (10) comprenant:
une paire de tiges de guidage sensiblement parallèles (14, 15),
un premier chariot (16) monté avec possibilité de coulissement sur ladite paire de tiges de guidage parallèles (14, 15), un premier élément d'objectif fixé audit premier chariot,
une première vis de guidage (28) ayant un axe longitudinal, ladite première vis de guidage (28) étant montée sur ledit dispositif grâce à un premier ensemble de bloc de roulement (30) de sorte que ledit axe longitudinal soit sensiblement parallèle à ladite paire de tiges de guidage (14, 15), ledit premier ensemble de bloc de roulement (30) limitant le mouvement de ladite première vis de guidage (28) le long dudit axe longitudinal,
un premier accouplement à écrou d'entraînement fileté (32) qui est en prise par vissage avec ladite première vis de guidage (28) de sorte que pour un déplacement le long de l'axe de ladite première vis de guidage (28), ledit premier accouplement à écrou d'entraînement fileté (32) est relié audit premier chariot (16) de façon à déplacer ledit premier chariot (16) le long de ladite première paire de tiges de guidage (14, 15), ledit premier accouplement à écrou d'entraînement fileté présentant un jeu axial pratiquement nul,
un premier moteur (84) ayant un axe d'entraînement (82) destiné à entraîner ladite première vis de guidage (28), ledit axe d'entraînement (82) dudit moteur étant relié audit premier ensemble de bloc de roulement (30) et monté sur ledit dispositif par un élément flexible (88),
un second chariot (116) monté avec possibilité de coulissement sur ladite première paire de tiges de guidage parallèles (14, 15),
un second élément d'objectif fixé audit second chariot,
une seconde vis de guidage (128) ayant un axe longitudinal, ladite seconde vis de guidage (128) étant montée sur ledit dispositif grâce à un second ensemble de bloc de roulement (30) de sorte que ledit axe longitudinal est sensiblement parallèle à ladite paire de tiges de guidage (14, 15), ledit second ensemble de bloc de roulement (30) limitant le mouvement de ladite seconde vis de guidage (128) le long dudit axe longitudinal,
un second accouplement à écrou d'entraînement fileté (132) qui est en prise par vissage avec ladite seconde vis de guidage (128) en vue d'un déplacement le long de l'axe de ladite seconde vis de guidage (128), ledit second accouplement à écrou d'entraînement fileté (138) étant relié audit second chariot (116) de façon à déplacer ledit second chariot (116) le long de ladite première paire de tiges de guidage (14, 15), ledit second accouplement d'entraînement fileté présentant un jeu axial pratiquement nul, et
un second moteur (84) ayant un axe d'entraînement destiné à entraîner ladite seconde vis de guidage (128), ledit axe d'entraînement dudit moteur (84) étant relié audit second ensemble de bloc de roulement (30) et monté sur ledit dispositif par un élément flexible (88).

2. Appareil à objectif à changement de focale selon la revendication 1, comprenant en outre un châssis (12), lesdits premier et second ensembles de roulements (30) étant montés sur ledit châssis (12), un ensemble de bloc de roulement (30) étant destiné à relier lesdites première et seconde vis de guidage (28, 128) auxdits premier et second moteurs (84), respectivement, lesdits premier et second ensembles de blocs de roulements (30) comprenant chacun,
un bloc de montage annulaire (50) comportant une ouverture (49), ladite ouverture ayant une première section d'alésage annulaire (66) d'un premier diamètre et une seconde section d'alésage annulaire (68) d'un second diamètre, lesdites première et seconde sections d'alésages (66, 68) étant pratiquement concentriques l'une avec l'autre, ledit second diamètre étant supérieur audit premier diamètre,
un premier roulement radial (36) disposé à l'intérieur de ladite première section d'alésage annulaire (68) et un second roulement radial (38) disposé à l'intérieur de ladite seconde section d'alésage annulaire (66), lesdits premier et second roulements radiaux (36, 38) étant fixés à l'intérieur de ladite ouverture (49), et
un élément d'accouplement d'axes comprenant un élément de collerette (64), ladite collerette (64) étant disposée entre lesdits premier et second roulements radiaux (36, 38), un élément de ressort (46) est disposé entre ladite collerette (64) et ledit premier ou second roulement radial (36, 38) de façon à appliquer une force de séparation entre lesdits premier et second roulements radiaux (36, 38).

3. Ensemble d'objectif à changement de focale selon la revendication 2, dans lequel ledit élément d'accouplement d'axes comprend une section supérieure (70) et une section inférieure (72), lesdites sections supérieur et inférieure (70, 72) ayant chacune un alésage interne (74, 76) destiné à recevoir l'extrémité d'un axe.

4. Ensemble d'objectif à changement de focale selon la revendication 3, ladite section supérieure (70) et ladite section inférieure (72) ayant une pluralité de fentes (77) qui s'étendent jusque dans ledit alésage (74, 76), ledit ensemble comprenant en outre un collier (42, 44) associé à ladite section inférieure (72) et à ladite section supérieure (70) dudit élément d'accouplement d'axes et un moyen destiné à serrer ledit collier de façon à serrer un axe placé dans ledit alésage interne (74, 76) desdites sections supérieure et inférieure (70, 72).

5. Ensemble d'objectif à changement de focale selon la revendication 2, dans lequel lesdits premier et second roulements (36, 38) comprennent chacun une piste intérieure (56) et une piste extérieure (58), ledit premier roulement (36) est positionné de façon fixe à l'intérieur de ladite première section d'alésage annulaire (66), ledit second roulement (38) ayant un diamètre extérieur inférieur audit second diamètre desdits seconds alésages annulaires de sorte que ledit second roulement (38) ne soit pas limité par les côtés de ladite seconde section d'alésage annulaire (68).

6. Ensemble d'objectif à changement de focale selon la revendication 1, comprenant en outre un moyen destiné à recalibrer la position des chariots, ledit moyen comprenant une échelle linéaire (140, 142) fixée à chacun des chariots (16, 116), un capteur fixe (134, 136) destiné à lire chacune desdites échelles (140, 142), et une unité centrale (164) destinée à commander le mouvement desdits moteurs (84) de sorte que la position desdits chariots (16, 116) soit correctement réglée.
